# EUROPÄISCHE PATENTSCHRIFT

(11) **EP 0 968 339 B1**
(45) Veröffentlichungstag und Bekanntmachung des Hinweises auf die Patenterteilung: **30.10.2002**
(21) Anmeldenummer: 98922617.0
(22) Anmeldetag: 12.03.1998
(51) Int. Cl.: E04B 2/74

(54) **BEFESTIGUNG VON FLÄCHENELEMENTEN IN NUTEN VON KLEMMPROFILSTÄBEN**
DEVICE FOR SECURING SURFACE ELEMENTS IN GROOVES IN CLAMPING PROFILED RODS
SYSTEME DE FIXATION D'ELEMENTS DE SURFACE DANS LES RAINURES DE BARRES PROFILEES DE SERRAGE

(30) Priorität: 13.03.1997 DE 29704548 U
(43) Veröffentlichungstag der Anmeldung: 05.01.2000
(73) Patentinhaber: Rixen, Wolfgang, Dipl.-Ing., 42699 Solingen (DE); Pies, Gerrit, 42699 Solingen (DE)
(72) Erfinder: Rixen, Wolfgang, Dipl.-Ing., 42699 Solingen (DE); Pies, Gerrit, 42699 Solingen (DE)
(74) Vertreter: Draudt, Axel Hermann Christian, Dipl.-Ing.
(86) Internationale Anmeldenummer: EP9801415
(87) Internationale Veröffentlichungsnummer: WO98040575

(56) Entgegenhaltungen:
- EP-A- 0 528 526
- DE-A- 3 605 949
- DE-U- 9 110 357

## Beschreibung

Die Erfindung bezieht sich auf eine Befestigung von Flächenelementen in Nuten von Klemmprofilstäben gemäß den Merkmalen des Oberbegriffs des Anspruchs 1.

Derartige Befestigungen werden eingesetzt, wenn Flächenelemente und Klemmprofilstäbe zu Wandelementen zusammengebaut werden, mit denen zum Beispiel mobile Raumaufteilungen erreicht werden sollen. Die Wandelemente dienen dann als Präsentationswände oder werden in Produktionsanlagen als Tragwände od.dgl. eingesetzt. Gemeinsam mit den Klemmprofilstäben dienen die Flächenelemente auch der Versteifung der gesamten Wand. Die Befestigungen tragen dabei zur Entlastung der Stoßverbindungsmittel winklig aneinanderstoßender Klemmprofilstäbe bei.

Aus der DE 9 110 357 U ist eine Befestigung mit den eingangs genannten Merkmalen bekannt. Das bekannte Federblech ist mehrschenkelig. Seine Schenkel stützen sich am Boden der Nut, an einer Nutwand und an dem eingesteckten Flächenelement ab. Darüber hinaus ist das bekannte Federblech an zwei Schenkeln mehrfach geschlitzt. Die Ausbildung des bekannten Federblechs setzt voraus, daß aufeinanderfolgend mehrere Stanzund Verformungsvorgänge erfolgen. Diese Herstellung des bekannten Federblechs ist vergleichsweise aufwendig und führt zu einem voluminösen Element mit entsprechendem Lagervolumen.

Bei der bekannten Befestigung ist das Federblech in der Lage, in Verbindung mit dünneren und dickeren Flächenelementen verwendet zu werden. Dabei wird jedoch der Anstellungswinkel des auf das Flächenelement drückenden Federschenkels um so kleiner, je dicker das Flächenelement ist. Infolgedessen ergibt sich bei dickeren Flächenelementen eine Verschlechterung der Verkrallung der Kante des Federblechschenkels am Flächenelement, je dicker letzteres ist.

Eine Befestigung mit den Merkmalen des Oberbegriffs des Anspruchs 1 ist aus der DE 36 05 949 A1 bekannt. Der Klemmprofilstab ist im wesentlichen U-förmig, so daß sich seine Nut zwischen beiden Schenkeln erstreckt, zwischen denen das Flächenelement angeordnet ist. Das Flächenelement muß etwas breiter sein, als der Abstand der Schenkel, damit es bei nicht in den Klemmprofilstab hineingestecktem Flächenelement nicht herausfällt.

Demgegenüber liegt der Erfindung die Aufgabe zugrunde, eine Befestigung mit den eingangs genannten Merkmalen so zu verbessern, daß auch dickere Flächenelemente in den Nuten von Klemmprofilstäben sicher und mit vereinfachten Mitteln gehalten sind.

Diese Aufgabe wird durch die Merkmale des Anspruchs 1 gelöst.

Für die Erfindung ist von Bedeutung, daß das unausgelenkte Federblech einfachster Ausbildung ist. Es ist ein plattenartiger und ungeschlitzter Blechstreifen, der also vollflächig vorhanden und praktisch eben ist. Er kann durch einfaches Ablängen von einer Blechstreifenrolle hergestellt werden. Unausgelenkt ist der Blechstreifen völlig flach, vielleicht abgesehen von geringfügigen Verformungen, die sich infolge der Aufwicklung des Blechstreifens auf eine Rolle nach größerer Lagerzeit ergeben haben.

Des weiteren ist die Befestigung so ausgebildet, daß die Nut außermittig zum Klemmprofilstab in der Nähe einer ersten Außenwand angeordnet ist, und daß die Nut und die Hohlkammer gemeinsam einen Auslenkraum des Blechstreifens bilden. Infolgedessen kann der Blechstreifen über einen beträchtlichen Höhenabschnitt verformt werden, was für die Aufnahme unterschiedlich dicker Flächenelemente von Bedeutung ist.

Besonders breite Blechstreifen und/oder besonders dicke Flächenelemente können angewendet werden, wenn sich die Hohlkammer von der Nut bis zu einer zweiten, der ersten parallelen Außenwand erstreckt. Infolgedessen wird der gesamte zwischen den beiden Außenwänden befindliche Raum konstruktiv zur Festlegung eines Flächenelements genutzt.

Da der Blechstreifen in der Nähe der Nutenmündung quer zur Nut angeordnet ist, führt ein Einstecken eines Flächenelements unabhängig von dessen Dicke in jedem Fall zu einer erheblichen Verformung des Blechstreifens und damit zu entsprechenden Haltekräften. Außerdem wird erreicht, daß die Nut vom Blechstreifen abgedeckt ist. Eine komplette Abdeckung der Nut ergibt sich dann, wenn sich der Blechstreifen über die gesamte Länge des Klemmprofilstabs erstreckt. Außerdem ist das Ausmaß der Abdeckung der Nut von der Breite des Blechstreifens quer zum Profilstab abhängig.

Zweckmäßigerweise ist die Befestigung so ausgebildet, daß der Blechstreifen länger als hoch ist. Bei einer derartigen Ausbildung des Blechstreifens ergibt sich bei üblichen Bemessungen der Querschnitte der Klemmprofilstäbe eine sichere Halterung des Blechstreifens. Außerdem ist die Anlage- bzw. Andrückfläche des Blechstreifens am Flächenelement vergleichsweise groß. Ein Flächenelement wird daher auch bei nur stellenweiser Beaufschlagung sicher gehalten.

Eine besonders gleichmäßige Halterung eines Flächenelements an einer Kante ergibt sich, wenn sich der Blechstreifen praktisch über die gesamte Länge des Klemmprofilstabs erstreckt. Der Blechstreifen beaufschlagt eine Kante eines Flächenelements dann über dessen gesamte Kantenlänge.

Eine vorteilhafte Anordnung des Blechstreifens innerhalb des Klemmprofilstabs wird dadurch erreicht, daß der Blechstreifen mit einem sich über die gesamte Streifenlänge erstreckenden Rand innerhalb einer Hohlkammer des Klemmprofilstabs angeordnet ist. Dadurch ergeben sich Möglichkeiten zur besonders vorteilhaften Festlegung des Blechstreifens durch zweckmäßige Formgebung der Hohlkammer. Insbesondere kann die Hohlkammer so ausgebildet werden, daß der Blechstreifen an seinem in die Hohlkammer eingesetzten Rand ein Widerlager gegen Ausbiegungen findet, die durch ein eingestecktes Flächenelement verursacht werden.

Eine weitere Ausgestaltung der Befestigung wird dadurch charakterisiert, daß die Hohlkammer eine dritte, mit der zweiten einstückige Außenwand bildet, die die Nutenmündung aufweist. Infolgedessen ist die Hohlkammer so weit wie möglich vom Zentrum des Klemmprofilstabs entfernt, insbesondere wenn die dritte Außenwand eine der zweiten Außenwand entsprechende minimale Wandstärke aufweist.

Die Befestigung kann dahingehend verbessert werden, daß der Blechstreifen entgegen seiner Ausbiegerichtung mit Abstand zu seiner dem Flächenelement gegenüberliegenden Kante am Klemmprofilstab abgestützt ist. Dadurch ist es einerseits möglich, das Klemmstabprofil optimal auszubilden, beispielsweise in gewünschter Weise dünnwandig, andererseits aber einen vergleichsweise breiten Blechstreifen einzusetzen und dessen Auslenkraum in geeigneter Weise zu bemessen.

Um besser definierte Abstützverhältnisse des Blechstreifens am Klemmprofilstab zu erreichen, kann die Befestigung so ausgebildet werden, daß die dritte Außenwand an ihrer Innenfläche nutseitig und/oder zweiteaußenwandseitig einen den Blechstreifen abstützenden Vorsprung aufweist. Der Vorsprung der dritten Außenwand dient beispielsweise mit der vorerwähnten Abstützung des Blechstreifens entgegen seiner Ausbiegerichtung dazu, eine vorbestimmte Abstützlänge zu erreichen.

Um einen einfachen Zusammenbau des Blechstreifens mit dem Klemmprofilstab zu erreichen, wird die Befestigung so ausgebildet, daß der Blechstreifen längs in das Klemmstabprofil eingeschoben ist.

Die Erfindung wird anhand eines in der Zeichnung dargestellten Ausführungsbeispiels erläutert. Es zeigt:
- Fig.1: einen Querschnitt eines Klemmprofilstabs mit eingelegtem Blechstreifen, und
- Fig.2,3: einen der Fig.1 entsprechenden Querschnitt, jedoch mit unterschiedlich breiten eingesteckten Flächenelementen, die den Blechstreifen entsprechend ihrer Dicke auslenken.

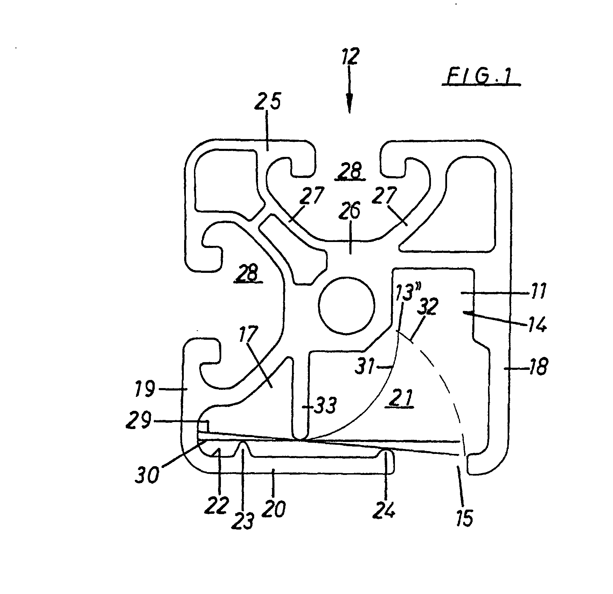

In den Fig.1 bis 3 ist jeweils ein Klemmprofilstab 12 im Querschnitt dargestellt. Der Stab 12 erstreckt sich senkrecht zur Darstellungsebene über eine vorbestimmte Länge. Das Profil des Stabs 12 ist im wesentlichen quadratisch. Dementsprechend sind gleich lange Außenwände 18 bis 20 und 25 vorhanden. Diese Außenwände stehen mit einem Zentralstab 26 und weiteren, den Profilierungsanforderungen entsprechend ausgebildeten Verbindungsstegen 27 in einstückiger Verbindung. Die Außenwände 19,25 sind jeweils mit hinterschnittenen Nuten 28 versehen und die Außenwand 20 weist die Nutmündung 15 einer Nut 11 auf, in die ein Flächenelement 10 mit seiner Längskante eingesteckt werden kann. Diese Längsnut 11 erstreckt sich parallel zur Außenwand 18, die über ihre gesamte Breite glatt durchläuft, bis über die Profilmitte hinaus in die Nähe der der Außenwand 25 zugeordneten Nut 28.

Um ein in die Nut 11 mit einer Kante eingestecktes Flächenelement 10 zu befestigen, ist ein Blechstreifen 13 vorhanden, der das Flächenelement 10 gegen eine Abstützfläche 14 der Außenwand 18 drückt.

Fig.1 zeigt mögliche Grenzstellungen 29,30 des Blechstreifens 13. Demnach ist der Blechstreifen im wesentlichen parallel zur Außenwand 20 angeordnet und erstreckt sich innerhalb einer Hohlkammer 17 des Klemmprofilstabs 12 von dessen Außenwand 19 bis in die Nähe der Außenwand 18. Dabei ist der Blechstreifen 13 in seiner aus den Fig.1 bis 3 entnehmbaren Höhe dem Abstand der Außenwände 18,19 angepaßt und nimmt praktisch die gesamte Breite zwischen diesen Wänden ein. Fig.1 zeigt dazu, daß der Blechstreifen 13 die Nut 11 in der Nähe der Nutmündung 15 praktisch vollständig abdeckt. Dabei ist angenommen, daß der Blechstreifen 13 mit seiner Kante 13' an die Außenwand 19 anstößt. Es ist jedoch auch eine Stellung des Blechstreifens 13 möglich, in der dessen Kante 13' etwas Abstand von der Außenwand 19 hat.

Der Blechstreifen 13 ist ein Federblech und besteht beispielsweise aus federndem Stahl. Die Länge des Blechstreifens 13, also dessen Erstreckung senkrecht zur Darstellungsebene, wird den Befestigungsanforderungen entsprechend gewählt. Zweckmäßigerweise ist die Länge des Blechstreifens 13 größer, als dessen aus den Fig.1 bis 3 ersichtliche Höhe. Der Blechstreifen 13 kann sich auch über die gesamte Länge des Klemmprofilstabs 12 erstrecken. Der Zusammenbau des Blechstreifens 13 und des Klemmstabs 12 erfolgt praktischerweise derart, daß der Blechstreifen 13 vorzugsweise fabrikseitig längs in das Klemmstabprofil 10 eingeschoben ist. Fig.1 zeigt zwei Extremstellungen 29,30 eines ebenen Blechstreifens 13, der also dementsprechend plattenartig ist. Des weiteren wird vorausgesetzt, daß der Blechstreifen 13 ungeschlitzt ist und damit als Bandmaterial von einem Wickel abgewickelt und durch Ablängen hergestellt werden kann. Der durch die Extremstellungen 29,30 veranschaulichte Spielraum ermöglicht das Längseinschieben des Blechstreifens 13 in den Klemmprofilstab 12 auch dann, wenn der Blechstreifen 13 nicht ideal eben sein sollte.

Die Nut 11 und die den Blechstreifen 13 im wesentlichen aufnehmende Hohlkammer 17 bilden einen zusammenhängenden Raum, in dem sich auch der Auslenkraum 21 des Blechstreifens 13 befindet. Fig.1 kennzeichnet diesen Auslenkraum 21 durch eine Extremstellung 31 des Blechstreifens 13 und eine Linie 32, auf der die flächenelementseitige Kante 13'' je nach Dikke der eingesteckten Flächenelemente 10 zu liegen kommen kann. Dieser Auslenkraum 21 wird auch durch Abstützmittel des Klemmprofilstabs 12 bestimmt.

Zwischen der Nutmündung 15 und der Außenwand 19 wird der Blechstreifen 13 im Falle einer Ausbiegung mit einem am Zentralstab 26 angebrachten leistenartigen Vorsprung 33 abgestützt. Die Abstützung erfolgt mit Abstand zur Kante 13' entgegen der Ausbiegerichtung des Blechstreifens 13. Zwischen diesem Vorsprung 33 und der Außenwand 19 ist an der Innenfläche 22 der dritten Außenwand 20 ein leistenartiger Vorsprung 23 mit Abstand zur Außenwand 19 angeordnet, der ein definiertes Widerlager für den Rand 16 des Blechstreifens 13 bildet. Ein weiterer leistenartiger Vorsprung 24 grenzt an die Nutenmündung 15 an, versteift die Außenwand 20 und begrenzt die möglichen Stellungen des Blechstreifens 13 in der Hohlkammer 17, wobei der Vorsprung 33 etwa mittig zwischen den Vorsprüngen 23,24 angeordnet ist.

Der Vorsprung 23 sichert mit seinem fixen Abstand zum Vorsprung 33 eine definierte Ausbiegung des Blechstreifens 13 auch dann, wenn dessen Kante 13' von der Außenwand 19 etwas entfernt ist.

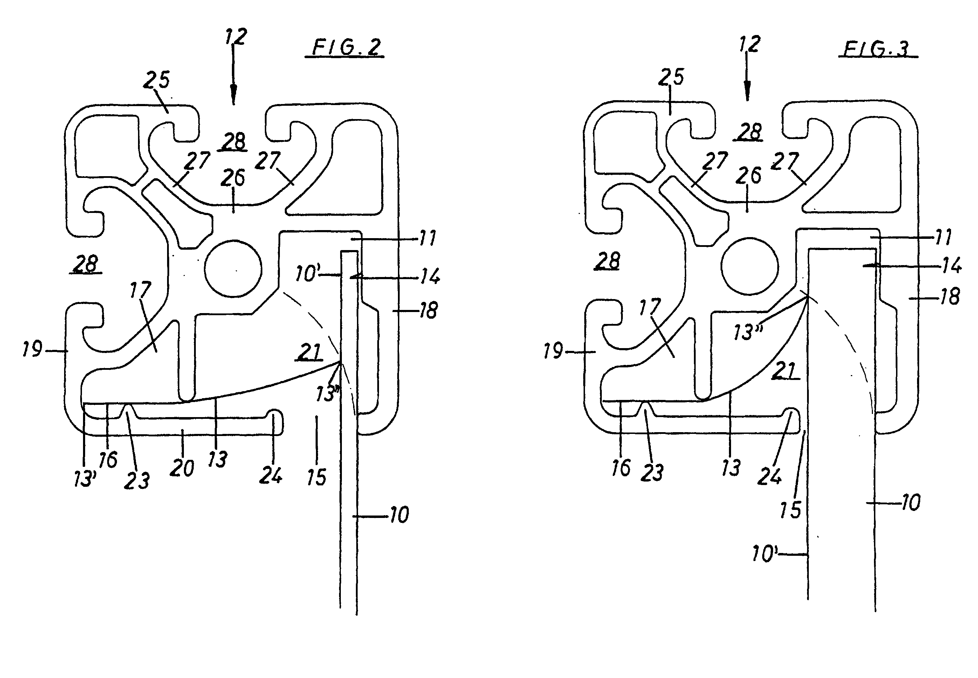

Aus den Fig.2,3 ist ersichtlich, daß die Ausbiegung des Blechstreifens 13 von der Dicke der Flächenelemente 10 abhängig ist. Ist das Flächenelement 10 vergleichsweise dünn, beträgt seine Dicke also etwa nur 25 % der Weite der Nut 15, so wird der Blechstreifen, dessen Kante 13'' im Falle einer noch nicht erfolgten Verformung der Abstützfläche 14 unmittelbar benachbart ist, nur im geringen Maße ausgelenkt. Es erfolgt eine sehr starke Verkrallung dieser Kante 13'' an der nutseitigen Fläche 10' des Flächenelements 10. Wenn die Dicke des Flächenelements 10 größer ist und praktisch der gesamten Weite der Nut 15 entspricht, wird die Kante 13'' des Blechstreifens 13 erheblich weiter zum Zentralstab 26 hin verlagert. Die Verkrallung der Kante 13'' mit der Fläche 10' ist dann zwar etwas geringer, jedoch ist der Anpreßdruck des Blechstreifens 13 größer, so daß auch in diesem Fall eine ausreichende Festlegung des Elements 10 erfolgt.

## Patentansprüche

1. Befestigung von Flächenelementen (10) in Nuten (11) von Klemmprofilstäben (12), mit einem in einer Nut (11) angeordneten Federblech, das von einem in die Nut (11) eingesteckten Flächenelement (10) ausgelenkt ist und dieses dementsprechend gegen eine in der Nut (11) befindliche Abstützfläche (14) drückt, wobei das Federblech ein unausgelenkt plattenartiger und ungeschlitzter Blechstreifen (13) ist, **dadurch gekennzeichnet, daß** die Nut (11) und eine den Blechstreifen (13) aufnehmenden Hohlkammer (17) des Klemmprofilstabs (12) gemeinsam einen einer Auslenkung des Blechstreifens (13) dienenden Auslenkraum (21) bilden, bei dem die Nut (11) außenmittig zum Klemmprofilstab (12) in der Nähe einer ersten Außenwand (18) angeordnet ist, und bei dem sich die Hohlkammer (17) von der Nut (11) bis zu einer zweiten, der ersten parallelen Außenwand (19) erstreckt und den Blechstreifen (13) in der Nähe einer Nutenmündung (15) quer zur Nut (11) angeordnet hält.

2. Befestigung von Flächenelementen (10) nach Anspruch 1, **dadurch gekennzeichnet, daß** der Blechstreifen (13) länger als hoch ist.

3. Befestigung von Flächenelementen (10) nach Anspruch 1 oder 2, **dadurch gekennzeichnet, daß** sich der Blechstreifen (13) praktisch über die gesamte Länge des Klemmprofilstabs (12) erstreckt.

4. Befestigung von Flächenelementen (3) nach einem der Ansprüche 1 bis 4, **dadurch gekennzeichnet, daß** der Blechstreifen (13) mit einem sich über die gesamte Streifenlänge erstreckenden Rand (16) innerhalb der Hohlkammer (17) des Klemmprofilstabs (12) angeordnet ist.

5. Befestigung von Flächenelementen (10) nach einem der Ansprüche 1 bis 4, **dadurch gekennzeichnet, daß** die Hohlkammer (17) eine dritte, mit der zweiten einstückige Außenwand (20) bildet, die die Nutenmündung (11) aufweist.

6. Befestigung von Flächenelementen (10) nach einem der Ansprüche 1 bis 5, **dadurch gekennzeichnet, daß** der Blechstreifen (13) entgegen seiner Ausbiegerichtung mit Abstand zu seiner dem Flächenelement (10) gegenüberliegenden Kante (13') am Klemmprofilstab (10) abgestützt ist.

7. Befestigung von Flächenelementen (10) nach einem der Ansprüche 5 oder 6, **dadurch gekennzeichnet, daß** die dritte Außenwand (20) an ihrer Innenfläche (22) nutseitig und/oder zweiteaußenwandseitig einen den Blechstreifen (13) abstützenden Vorsprung (23,24) aufweist.

8. Befestigung von Flächenelementen (10) nach einem der Ansprüche 1 bis 7, **dadurch gekennzeichnet, daß** der Blechstreifen (13) längs in das Klemmstabprofil (10) eingeschoben ist.

## Claims

1. Attachment of surface elements (10) in grooves (11) of profiled clamping rods (12), having a spring plate which is disposed in a groove (11) and which is deflected by a surface element (10) inserted into the groove (11) and accordingly urges this surface element against a support surface (14) located in the groove (11), wherein the spring plate is a non-deflected, plate-like and non-slit sheet metal strip (13), **characterised in that** the groove (11) and a hollow chamber (17) - receiving the sheet metal strip (13) - of the profiled clamping rod (12) together form a deflection chamber (21) serving for deflection of the sheet metal strip (13), wherein the groove (11) is disposed off-centre with respect to the profiled clamping rod (12) in the proximity of a first outer wall (18), and wherein the hollow chamber (17) extends from the groove (11) to a second outer wall (19) - which is parallel to the first outer wall - and holds the sheet metal strip (13) in place in the proximity of a groove opening (15) transverse to the groove (11).

2. Attachment of surface elements (10) as claimed in claim 1, **characterised in that** the sheet metal strip (13) is longer than it is high.

3. Attachment of surface elements (10) as claimed in claim 1 or 2, **characterised in that** the sheet metal strip (13) extends practically over the whole length of the profiled clamping rod (12).

4. Attachment of surface elements (3) as claimed in one of claims 1 to 4, **characterised in that** the sheet metal strip (13) is disposed with an edge (16), which extends over the whole strip length, inside the hollow chamber (17) of the profiled clamping rod (12).

5. Attachment of surface elements (10) as claimed in one of claims 1 to 4, **characterised in that** the hollow chamber (17) forms a third outer wall (20) which forms one piece with the second outer wall and comprises the groove opening (11).

6. Attachment of surface elements (10) as claimed in one of claims 1 to 5, **characterised in that** the sheet metal strip (13) bears against the profiled clamping rod (10) against its deflection direction, at a distance from its edge (13') opposite the surface element (10).

7. Attachment of surface elements (10) as claimed in one of claims 5 or 6, **characterised in that** the third outer wall (20) on its inner surface (22) on the groove side and/or second outer wall side has a projection (23, 24) supporting the sheet metal strip (13).

8. Attachment of surface elements (10) as claimed in one of claims 1 to 7, **characterised in that** the sheet metal strip (13) is pushed longitudinally into the clamping rod profile (10).

## Revendications

1. Fixation d'éléments plans (10) dans des rainures (11) de barres profilées de serrage (12), comportant une tôle élastique qui est disposée dans une rainure (11), qui est déviée par un élément plan (10) emboîté dans la rainure (11) et qui pousse ledit élément plan (10) en conséquence contre une surface d'appui (14) située dans la rainure (11), la tôle élastique étant constituée par une bande de tôle (13) qui a la forme d'une plaque et qui est non fendue quand elle n'est pas déviée, **caractérisée en ce que** la rainure (11) et une chambre creuse (17) de la barre profilée de serrage (12) qui reçoit la bande de tôle (13) définissent ensemble un espace de déviation (21) qui sert à une déviation de la bande de tôle (13), la rainure (11) étant disposée près d'une première paroi extérieure (18) en étant excentrée par rapport à la barre profilée (12), et la chambre creuse (17) s'étendant de la rainure (11) à une deuxième paroi extérieure (19) parallèle à la première et maintenant la bande de tôle (13) près d'une ouverture de rainure (15) transversale par rapport à la rainure (11).

2. Fixation d'éléments plans (10) selon la revendication 1, **caractérisée en ce que** la bande de tôle (13) est plus longue que haute.

3. Fixation d'éléments plans (10) selon la revendication 1 ou 2, **caractérisée en ce que** la bande de tôle (13) s'étend pratiquement sur toute la longueur de la barre profilée de serrage (12).

4. Fixation d'éléments plans (10) selon l'une des revendications 1 à 4, **caractérisée en ce que** la bande de tôle (13) est disposée, avec un bord (16) s'étendant sur toute sa longueur, à l'intérieur de la chambre creuse (17) de la barre profilée de serrage (12).

5. Fixation d'éléments plans (10) selon l'une des revendications 1 à 4, **caractérisée en ce que** la chambre creuse (17) définit une troisième paroi extérieure (20), réalisée d'une seule pièce avec la deuxième, qui présente l'ouverture de rainure (11).

6. Fixation d'éléments plans (10) selon l'une des revendications 1 à 5, **caractérisée en ce que** la bande de tôle (13) est en appui contre la barre profilée de serrage (12) à l'encontre de son sens de flexion et à une certaine distance de son bord (13') opposé à l'élément plan (10).

7. Fixation d'éléments plans (10) selon la revendication 5 ou 6, **caractérisée en ce que** la troisième paroi extérieure (20) présente sur sa surface intérieure (22), du côté de la rainure et/ou du côté de la deuxième paroi extérieure, une saillie (23, 24) qui supporte la bande de tôle (13).

8. Fixation d'éléments plans (10) selon l'une des revendications 1 à 7, **caractérisée en ce que** la bande de tôle (13) est glissée longitudinalement dans le profilé de serrage (10).
